# EUROPEAN PATENT SPECIFICATION

(11) **EP 3 771 375 B1**
(45) Date of publication and mention of the grant of the patent: **24.08.2022**
(21) Application number: 20187754.5
(22) Date of filing: 24.07.2020
(51) Int. Cl.: A47J 42/38, A47J 31/42

(54) **ANTI-STATIC GRINDER DEVICE FOR GRINDING ROASTED COFFEE BEANS FOR BEVERAGE PREPARATION**
ANTISTATISCHE MÜHLE ZUM MAHLEN VON GERÖSTETEN KAFFEEBOHNEN ZUR ZUBEREITUNG VON GETRÄNKEN
DISPOSITIF DE MOULIN ANTISTATIQUE POUR LA MOUTURE DE GRAINS DE CAFÉ TORRÉFIÉS POUR LA PRÉPARATION DE BOISSONS

(30) Priority: 31.07.2019 IT 201900013392
(43) Date of publication of application: 03.02.2021
(73) Proprietor: Gruppo Cimbali S.p.A., 20082 Binasco (MI) (IT)
(72) Inventor: Abbiati, Giacomo, 20082 Binasco MI (IT)
(74) Representative: Perani & Partners S.p.A.

(56) References cited:
- WO-A1-2015/028372
- US-A1- 2015 135 966
- US-B1- 6 988 444

## Description

### Field of the invention

The present invention relates to a device for grinding roasted coffee beans for beverage preparation, which reduces the electrostatic charge formed in coffee grounds after the coffee bean crushing action of the grinders.

In particular, but without limitation, the device addressed by the present invention is a grinder, i.e. a device for producing a predetermined amount of coffee grounds.

### Background art

Roasted coffee bean grinder devices are known to comprise a grinding chamber, a pair of grinders, one on top of the other, housed within said grinding chamber and positioned with a horizontal or vertical orientation. One grinder of the pair of grinders, is rotatable relative to the other grinder, which is kept stationary and is mounted to a support, conventionally a drive shaft which is connected to and rotated by an electric drive motor.

The grinding chamber, containing the grinders, has a first opening for introducing the roasted coffee beans to be ground between the grinders and a second opening for discharging the ground product.

In addition, the device also comprises a conventional electronic control unit which supervises the various functions of the device.

When the grinding device is operated, automatically or by an operator's command, the relative motion of the grinders creates a negative pressure which causes and facilitates the entry of the beans into the grinding chamber and transfers them into the area in which the grinders are operative.

The coffee bean crushing action of the relatively-rotating grinders generates electrostatically charged coffee grounds, some of which are removed through a conventional grounding cable in prior art devices.

Nevertheless, if the environment is very dry, a large amount of these electrostatically charged grounds till adhere to the walls of the grinding chamber, normally made of poorly conductive materials, and to the walls of the dispensing conduit, typically made of plastic material.

These circumstances cause a weight loss in the ground coffee with respect to the predetermined dose to be dispensed by the grinding device and determined by the weight of the roasted coffee beans in the device.

Assuming an amount of 14 grams of roasted coffee beans, if the roasted coffee beans have a moisture degree of 1,1%, 2,8 grams of ground coffee have been found to be lost, on average, due to the electrostatic effect.

In particular, the coffee grounds adhering to the dispensing conduit have been also found to attract, by an electrostatic effect, the additional amount of incoming coffee grounds to partially block the conduit.

This causes irregularities in the flow of ground coffee and therefore a serious functional drawback, particularly in so-called "on demand" grinders.

In an attempt to obviate the above discussed drawbacks certain arrangements have been provided including, for example, the application of a vibratory motion to the ground coffee-dispensing conduit or at least a portion thereof. However, this vibratory motion causes the drawback of making the grinding device very noisy. According to a different prior art technique, as disclosed for example in DE 19832 413 A1, an air ionization device is positioned at the ground coffee outlet, or an antistatic ring is used downstream from the milling chamber, as described in WO 2015028372. A1.

Nevertheless, none of the above discussed prior art arrangements can entirely and simply eliminate the drawbacks generated in ground coffee by the presence of the electrostatic charge formed during grinding of the roasted coffee beans.

### Object of the invention

The object of the invention is to eliminate or at least reduce the electrostatic charge in the coffee grounds generated during bean crushing.

The applicant has found that optimal results are achieved if the moisture degree in the roasted coffee beans is increased by spraying them with a predetermined quantity of a wetting substance, e.g. a few drops of water, as they enter the grinding chamber. Another object is to change the amount of wetting substance to be sprayed on the coffee beans according to the moisture content of the air of the surrounding environment or the moisture in the roasted coffee beans before grinding.

These and other objects, as better explained hereafter, are fulfilled by a roasted coffee bean grinding device characterized by claim 1 hereinafter.

### Brief description of the drawings

The invention will be now described in greater detail with reference to a practical implementation example, which is given by way of illustration and without limitation in the accompanying drawings, in which:
- Figure 1 shows a schematic front view of a roasted coffee bean grinding device having a device for moistening the beans of the product to be ground, according to the invention;
- Figure 2 shows an enlarged front view, of the roasted coffee bean inlet area in the grinding chamber of the grinder device of Figure 1;
- Figure 3 shows a front view of the grinding device of Figure 1 with a closing cover;
- Figure 4 shows a functional diagram of the antistatic device for grinding roasted coffee beans according to the invention.

### DETAILED DESCRIPTION

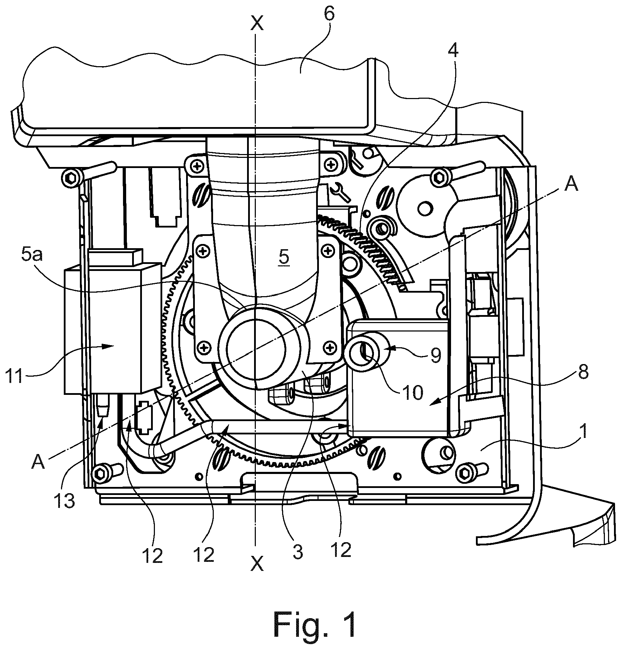

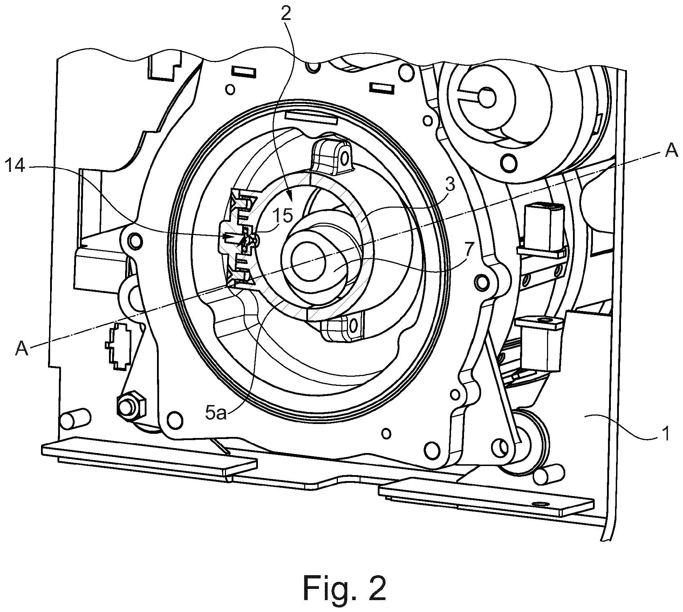

Referring to the above figures and in particular to Figures 1 and 2, it shall be noted that a conventional grinding device, for example for grinding roasted coffee beans to be sent to the portafilter of a conventional coffee machine, not shown in the drawings, comprises, inside a supporting frame, generally referenced 1 in Figure 1, a pair of grinders, one on top of the other, not shown in Figure 1 but housed within the grinding chamber 2 delimited by the cylindrical wall 3.

The grinders are conventionally arranged on a horizontal axis, like the one referenced A-A in Figure 1, and one is stationary and the opposite is rotatable, by being mounted to a drive shaft, for example aligned with the axis A-A and driven by a conventional electric motor, not shown in the drawings, to engagement with a gear wheel, like the one referenced 4 in Figure 1. A conduit 5 is connected to the grinding chamber 2 for conveying therein the roasted coffee beans contained in a conventional hopper 6 supported by the frame 1. In the structure of the drawings, the conduit 5 extends in a direction X-X perpendicular to the axis A-A of the grinders and of the grinding chamber 2.

A conventional rotating auger 7 is placed in the grinding chamber 2 and in the direction of the axis A-A, and receives the roasted coffee beans in the opening 5a from the conduit 5, and pushes them between the grinders to be crushed.

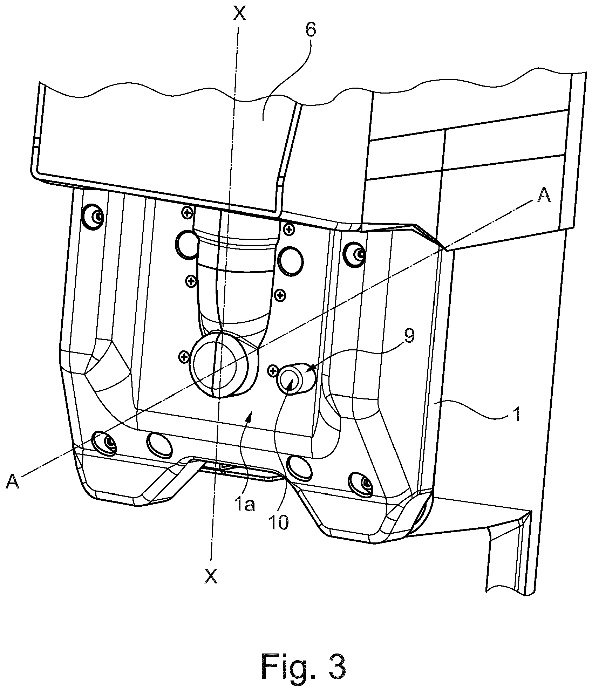

Referring to Figure 1, the moistening apparatus of the invention comprises a reservoir 8 adapted to contain a wetting substance, preferably a liquid and namely water, with a capacity that ranges from 15ml to 100 ml, having a collar 9, with a mouth 10, adapted to be accessed from outside the frame 1 for filling, even when it has a cover 1a, as shown in Figure 3.

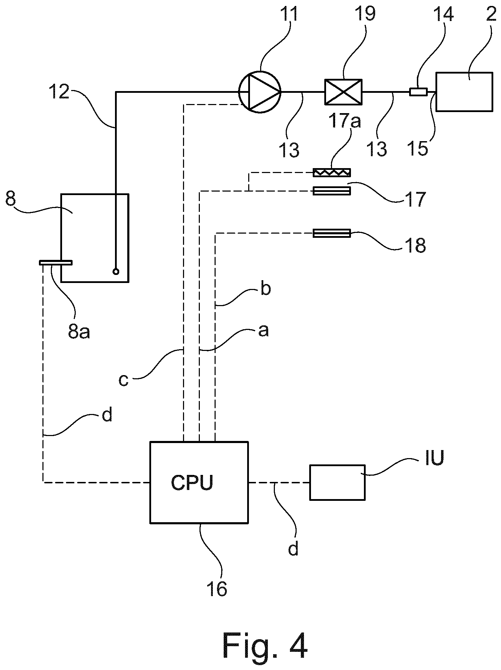

In one embodiment, the reservoir 8 may be also equipped with a sensor 8a for detecting the level of the wetting substance therein and indicating its value to a user interface UI, as shown in the functional diagram of Figure 4 by the connection line d and the CPU control unit.

The reservoir 8 is connected to a pump 11 via a suction duct 12.

The delivery 13 of the pump 11 is connected via a special duct, not shown in the drawings, to the joint 14 of an opening 15, the latter being formed in the cylindrical wall 3 that delimits the grinding chamber 2.

According to one embodiment of the invention, the pump 11 is programmed to deliver a metered amount, predetermined according to the weight of roasted coffee beans to be ground, to the grinding chamber 2, through the opening 15, directly upon the roasted coffee beans.

The pump 11 is controlled and the metered amount of wetting substance is sent and programmed according to the data stored in a conventional CPU control unit, referenced 16 in the functional diagram of Figure 4.

Referring to the aforementioned functional diagram of Figure 4, it will be appreciated that, in an alternative embodiment, the antistatic grinding device of the invention comprises a sensor 17 for detecting the moisture degree of the roasted coffee beans in the grinding chamber 2, which are being transferred between the grinders for crushing, as well as a sensor 17a for detecting the moisture conditions of the surrounding environment.

In another embodiment, the antistatic grinding device of the invention may also include a sensor, referenced 18 in the functional diagram of Figure 4, which is adapted to detect the degree of volatile substances released by the roasted coffee beans in the grinding chamber 2 as they are waiting to be crushed.

The data periodically detected by the sensors 17, 17a and 18, at intervals ranging, for instance, from 5 to 15 minutes, are sent to the CPU 16 via respective connection lines a, b, where they are stored, and, if they are deemed to be outside a predetermined range of values, they cause the release of a predetermined amount of wetting substance by withdrawing it from the reservoir 8 by triggering the pump 11 through the additional connection line c.

As an alternative to direct introduction of the wetting substance into the grinding chamber by the pump 11, downstream the pump 11 the device has a drop-forming member 19, e.g. a conventional pinch valve which periodically obstructs the aforementioned delivery duct 13, when triggered by the CPU control unit 16, thereby causing a drop feed.

Other types of wetting substance-feeding members equivalent to the drop-forming member 19 may be obviously provided and controlled by the CPU control unit 16, without departure from the scope of the invention.

For example, for a typical 14-15 gram dose of roasted ground coffee obtained from coffee beans with a humidity degree of 1,1 %, the addition of a few drops of wetting substance, namely water, for increasing the moisture degree of the coffee beans to 3,9%, proved that the weight loss in the above dose due to electrostatic charge had been reduced to 0,2 grams, thus resulting in an evident advantage in terms of accuracy of the dispensed dose.

## Claims

1. An antistatic roasted coffee bean grinder device, comprising a grinding chamber (2), a pair of grinders, one on top of the other, housed within said grinding chamber (2), one of these grinders being rotatable relative to the other which is kept stationary, a support for at least said rotatable grinder, a drive member (4), connected to said support for rotating said rotatable grinder, an electronic control and command unit (16), said grinding chamber (2), which contains said grinders, having a first opening (5a) for introducing the roasted coffee beans to be ground between the grinders, and a second opening to discharging the ground product, **characterized in that** it comprises a moistening apparatus for moistening the beans of the product to be ground, said moistening apparatus being adapted to feed a predetermined amount of wetting substance to the roasted coffee beans to be ground, said amount being dosed according to the amount of beans to be ground and of the moisture degree thereof.

2. A device as claimed in claim 1, **characterized in that** said wetting substance is liquid and said moistening apparatus comprises a reservoir (8) adapted to contain a given amount of said wetting liquid.

3. A device as claimed in claims 1 and 2, wherein said wetting liquid is water.

4. A device as claimed in claims 1 to 3, **characterized in that** said moistening apparatus comprises a wetting liquid dispenser (19) in the form of a drip feeder.

5. A device as claimed in claims 1 to 4, **characterized in that** said moistening apparatus comprises a pump (11) for feeding liquid to said liquid dispenser by drawing it from said reservoir (8).

6. A device as claimed in any of claims 1 to 5, **characterized in that** it comprises a humidity sensor for sensing the humidity conditions of the surrounding environment (17a) and for notifying them to said control unit (16) for controlling said moistening apparatus.

7. A device as claimed in any of claims 1 to 5, **characterized in that** it comprises a humidity sensor (17), for sensing the humidity conditions of the roasted coffee beans to be ground, contained in the grinding chamber and for notifying them to said control unit (16) for controlling said moistening apparatus.

8. A device as claimed in any of claims 1 to 7 **characterized in that** it comprises a volatile substance sensor (18) for sensing the volatile substances emitted by the roasted coffee beans to be ground, contained in the grinding chamber and for notifying them to said control unit (16) for controlling said moistening apparatus.

## Patentansprüche

1. Antistatische Mahlvorrichtung für geröstete Kaffeebohnen, mit einer Mahlkammer (2), einem Paar übereinander angeordneter Mühlen, die in der Mahlkammer (2) aufgenommen sind, wobei eine dieser Mühlen relativ zu der anderen, die stationär gehalten wird, drehbar ist, einem Stützelement für mindestens die drehbare Mühle, einem Antriebselement (4), das mit dem Stützelement verbunden ist, um die drehbare Mühle zu drehen, einer elektronischen Steuerungs- und Befehlseinheit (16), wobei die Mahlkammer (2), die die Mühlen enthält, eine erste Öffnung (5a) zum Einführen der zu mahlenden gerösteten Kaffeebohnen zwischen die Mühlen und eine zweite Öffnung zum Ausgeben des gemahlenen Produkts aufweist, **dadurch gekennzeichnet, dass** sie eine Benetzungsvorrichtung zum Befeuchten der Bohnen des zu mahlenden Produkts umfasst, wobei die Benetzungsvorrichtung so beschaffen ist, dass sie den zu mahlenden gerösteten Kaffeebohnen eine vorbestimmte Menge einer Befeuchtungssubstanz zuführt, wobei die Menge in Abhängigkeit von der Menge der zu mahlenden Bohnen und deren Feuchtigkeitsgehalt dosiert wird.

2. Vorrichtung nach Anspruch 1, **dadurch gekennzeichnet, dass** die Befeuchtungssubstanz flüssig ist und die Benetzungsvorrichtung ein Reservoir (8) umfasst, das eine bestimmte Menge der Befeuchtungsflüssigkeit enthalten kann.

3. Vorrichtung nach einem der Ansprüche 1 und 2, wobei die Befeuchtungsflüssigkeit Wasser ist.

4. Vorrichtung nach einem der Ansprüche 1 bis 3, **dadurch gekennzeichnet, dass** die Benetzungsvorrichtung einen Spender (19) für die Befeuchtungsflüssigkeit in Form einer Tropfvorrichtung umfasst.

5. Vorrichtung nach einem der Ansprüche 1 bis 4, **dadurch gekennzeichnet, dass** die Benetzungsvorrichtung eine Pumpe (11) umfasst, um dem Flüssigkeitsspender Flüssigkeit zuzuführen, indem diese aus dem Reservoir (8) abgezogen wird.

6. Vorrichtung nach einem der Ansprüche 1 bis 5, **dadurch gekennzeichnet, dass** sie einen Feuchtigkeitssensor umfasst, um die Feuchtigkeitsbedingungen der umliegenden Umgebung (17a) zu erfassen und sie der Steuerungseinheit (16) zur Steuerung der Benetzungsvorrichtung mitzuteilen.

7. Vorrichtung nach einem der Ansprüche 1 bis 5, **dadurch gekennzeichnet, dass** sie einen Feuchtigkeitssensor (17) umfasst, um die Feuchtigkeitsbedingungen der in der Mahlkammer enthaltenen, zu mahlenden gerösteten Kaffeebohnen zu erfassen und sie der Steuerungseinheit (16) zur Steuerung der Benetzungsvorrichtung mitzuteilen.

8. Vorrichtung nach einem der Ansprüche 1 bis 7, **dadurch gekennzeichnet, dass** sie einen Sensor für flüchtige Substanzen (18) umfasst, um die von den zu mahlenden, in der Mahlkammer enthaltenen gerösteten Kaffeebohnen abgegebenen flüchtigen Substanzen zu erfassen und sie der Steuerungseinheit (16) zur Steuerung der Benetzungsvorrichtung mitzuteilen.

## Revendications

1. Dispositif antistatique de broyage de grains de café torréfiés, comprenant une chambre de broyage (2), une paire de broyeurs, l'un sur l'autre, logés dans ladite chambre de broyage (2), l'un de ces broyeurs étant rotatif par rapport à l'autre qui est maintenu fixe, un support pour au moins ledit broyeur rotatif, un élément d'entraînement (4), relié audit support pour faire tourner ledit broyeur rotatif, une unité de contrôle et de commande électronique (16), ladite chambre de broyage (2), qui contient lesdits broyeurs, ayant une première ouverture (5a) pour introduire les grains de café torréfiés à broyer entre les broyeurs, et une seconde ouverture pour décharger le produit broyé, **caractérisé en ce qu'**il comprend un appareil d'humidification pour humidifier les grains du produit à broyer, ledit appareil d'humidification étant adapté pour alimenter en une quantité prédéterminée de substance mouillante les grains de café torréfiés à broyer, ladite quantité étant dosée en fonction de la quantité de grains à broyer et du degré d'humidité de ceux-ci.

2. Dispositif selon la revendication 1, **caractérisé en ce que** ladite substance mouillante est liquide et ledit appareil d'humidification comprend un réservoir (8) adapté pour contenir une quantité donnée dudit liquide mouillant.

3. Dispositif selon les revendications 1 et 2, dans lequel ledit liquide mouillant est de l'eau.

4. Dispositif selon les revendications 1 à 3, **caractérisé en ce que** ledit appareil d'humidification comprend un distributeur de liquide mouillant (19) sous la forme d'un dispositif d'alimentation de gouttes.

5. Dispositif selon les revendications 1 à 4, **caractérisé en ce que** ledit appareil d'humidification comprend une pompe (11) pour alimenter en liquide ledit distributeur de liquide en le tirant dudit réservoir (8).

6. Dispositif selon l'une quelconque des revendications 1 à 5, **caractérisé en ce qu'**il comprend un capteur d'humidité pour détecter les conditions d'humidité de l'environnement (17a) et pour les notifier à ladite unité de contrôle (16) pour contrôler ledit appareil d'humidification.

7. Dispositif selon l'une quelconque des revendications 1 à 5, **caractérisé en ce qu'**il comprend un capteur d'humidité (17), pour détecter les conditions d'humidité des grains de café torréfiés à broyer, contenus dans la chambre de broyage et pour les notifier à ladite unité de contrôle (16) pour contrôler ledit appareil d'humidification.

8. Dispositif selon l'une quelconque des revendications 1 à 7, **caractérisé en ce qu'**il comprend un capteur de substances volatiles (18) pour détecter les substances volatiles émises par les grains de café torréfiés à broyer, contenus dans la chambre de broyage et pour les notifier à ladite unité de contrôle (16) pour contrôler ledit appareil d'humidification.
